# EUROPÄISCHE PATENTSCHRIFT

(11) **EP 1 698 545 B1**
(45) Veröffentlichungstag und Bekanntmachung des Hinweises auf die Patenterteilung: **20.06.2007**
(21) Anmeldenummer: 06110701.7
(22) Anmeldetag: 06.03.2006
(51) Int. Cl.: B62J 1/00, G01L 1/02, A47C 31/12

(54) **Fahrradsattel-Überprüfungseinrichtung**
Device for inspection of a bicycle saddle
Dispositif de contrôle d'une selle de bicyclette

(30) Priorität: 04.03.2005 DE 202005003448 U
(43) Veröffentlichungstag der Anmeldung: 06.09.2006
(73) Patentinhaber: RTI Sports Vertrieb von Sportartikeln GmbH, 56220 Urmitz (DE)
(72) Erfinder: Arnold, Franc, 56068 Koblenz (DE); Nehring, Roland, Mülheim-Kärlich (DE); Tofaute, Kim, 50226 Frechen (DE)
(74) Vertreter: von Kirschbaum, Alexander

(56) Entgegenhaltungen:
- WO-A-03/011679
- DE-A1- 4 131 257
- GB-A- 2 370 359
- US-A- 5 821 415
- US-A- 6 009 750

## Beschreibung

Die Erfindung betrifft eine Fahrradsattel-Überprüfungseinrichtung zur Überprüfung des Sitzkomforts auf Fahrradsätteln, insbesondere Sportsätteln.

Fahrrad-Sportsättel, wie sie insbesondere bei Rennrädern und Mountainbikes verwendet werden, sind sehr schmal und hart, so dass die effektive Sitzfläche klein ist. Dies führt häufig zu Druckstellen und einem schlechten Sitzkomfort. Die beim Sitzen auf einem Fahrradsattel entstehenden Druckkräfte werden hauptsächlich von den Sitzknochen aufgenommen bzw. übertragen. Der Abstand der Sitzknochen ist stark individuell und kann zwischen 10 und 15 cm betragen. Ferner ändert sich der Abstand der Sitzknochen in Abhängigkeit der Sitzposition.

Mit Hilfe von wissenschaftlichen Messeinrichtungen ist es möglich, den Abstand der Sitzknochen zu bestimmen. Hierzu ist ein Fahrradsattel mit Drucksensoren versehen. Da derartige Messvorrichtungen teuer sind und die Auswertung der Messdaten aufwändig ist, sind derartige Messvorrichtung zur Bestimmung des richtigen Satteltyps für einen bestimmten Benutzer in vertretbarem Zeitaufwand nicht geeignet. Insbesondere können derartige Messvorrichtungen nicht in Fahrradgeschäften eingesetzt werden, da die Vorrichtung zu teuer, die Bedienung zu komplex und ferner zu zeitaufwändig ist. Ein derartiger, mit entsprechenden Drucksensoren versehener Messsattel ist in DE 201 12 013 U beschrieben.

Als kostengünstiges Verfahren zur Bestimmung des Abstandes der Sitzknochen bzw. zur Beurteilung, welcher Satteltyp für den entsprechenden Benutzer geeignet ist, ist es bekannt, als Druckabbildeelement eine Wellpappe auf einen Stuhl oder ebenen Untergrund zu legen. Der Benutzer bzw. Käufer eines Sattels wird gebeten, sich auf die Wellpappe zu setzen. Hierbei erfolgt ein Abdrücken der Sitzknochen. Dieses Verfahren weist jedoch den Nachteil auf, dass bereits ein geringes Hin- und Herrutschen auf der Wellpappe zu einer Vergrößerung des Abdrucks führt. Hierdurch wird die Bestimmung des Abstands der Sitzknochen ungenau. Hierbei ist zu berücksichtigen, dass bereits eine Verschiebung von 5-10 mm zu einer Fehlbeurteilung führen kann Ferner ist hierbei nicht berücksichtigt, dass sich der Abstand der Sitzknochen auch in Abhängigkeit der Sitzposition verändert Des weiteren ist die Wellpappe nicht wiederverwendbar.

Um eine Wiederverwendung des Druckabbildeelementes zu ermöglichen, ist es bekannt, anstatt der Wellpappe ein aus Schaum hergestelltes, flaches Element zu verwenden. Hierbei wird ein Schaumstoff eingesetzt, der eine geringe Ruckstellkraft aufweist, so dass der Abdruck der Sitzknochen über einen ausreichenden Zeitraum erhalten bleibt. Wenngleich bei dem Verwenden eines derartigen Schaums eine Wiederverwendbarkeit gewährleistet ist, ist dennoch die Sitzposition nicht berücksichtigt. Sowohl beim Verwenden der Wellpappe als auch beim Verwenden eines speziellen Schaumstoffs ist es anschließend erforderlich, in Abhängigkeit der Abdrücke der Sitzknochen den Schaumstoff oder die Wellpappe zu vermessen, um beispielsweise den Abstand der Sitzknochen zu bestimmen. Da die Sitzposition hierbei nicht berücksichtigt ist, ist eine Übertragung auf einen Sattel bzw. die Auswahl eines individuell geeigneten Sattels weiterhin schwierig bzw. ungenau.

Aus WO 03/011679 ist ein spezieller Messsattel mit Drucksensoren bekannt. Ferner ist hierin beschrieben, dass eine Druckmessfolie temporär auf einen anzupassenden Zweiradsattel gelegt werden kann. Die von der Druckmessfolie erhaltenen Messdaten können über einen Computer graphisch dargestellt werden. Es ist sodann möglich, die graphische Darstellung auszudrucken und durch Auflegen des Ausdrucks auf den Sattel auf diesen zu übertragen. Hierbei handelt es sich um ein relativ aufwändiges Verfahren, wobei zusätzlich Übertragungsfehler auftreten können. Des Weiteren ist in WO 03/011679 beschrieben, dass die Druckmesseinrichtung eine druckempfindliche Schicht aufweisen kann, wobei die Druckstellen bzw. Problemzonen sodann durch eine Farbveränderung angezeigt werden. Ebenso ist das Vorsehen einer druckempfindlichen Gelschicht beschrieben, wobei die entsprechenden Stellen sodann auf Grund einer Oberflächenveränderung sichtbar sind. Auch hierbei ist es wiederum erforderlich, beispielsweise den Abstand der Sitzknochen der Druckmesseinrichtung zu messen. Dies kann zu Ungenauigkeiten führen. Bei dem in WO 03/011679 beschriebenen Verfahren soll durch Feststellen der Problemzonen ein Sattel, beispielsweise durch Vorsehen entsprechender Polster, angepasst werden. Es ist insofern ein Übertragen der Messergebnisse auf den Sattel selbst erforderlich. Diese Übertragung ist fehleranfällig bzw. kann zu Ungenauigkeiten führen.

Aufgabe der Erfindung ist es, eine Fahrradsattel-Üherprüfungseinrichtung zum Überprüfen des Sitzkomforts insbesondere für Sportsättel zu schaffen, mit der eine exakte Bestimmung der individuellen Anforderungen an einen Sattel bezuglich der Lage und der Stellung der Sitzknochen möglich ist.

Die Lösung der Aufgabe erfolgt erfindungsgemäß durch die Merkmale des Anspruchs 1.

Die erfindungsgemäße Fahrradsattel-Überprufungseinrichtung weist ein Druckabbildeelement zum Visualisieren der auf die Sitzknochen eines Benutzers wirkenden Kräfte, bzw. der von den Sitzknochen übertragenen Kräfte auf. Um die Lage der Sitzknochen nicht abstrakt ausmessen zu müssen, sondern in Verbindung mit einem Sattel prüfen zu können, ist das Druckabbildeelement erfindungsgemäß mit einer Fixiereinrichtung verbunden. Mit Hilfe der Fixiereinrichtung ist es möglich, das Druckabbildeelement an dem zu überprüfenden Sattel zu befestigen. Der Abstand der Sitzknochen wird somit nicht abstrakt unabhängig von dem interessierenden Sattel gemessen, sondern unmittelbar in Verbindung mit dem Sattel. Dies hat insbesondere den Vorteil, dass der Benutzer, bzw. der interessierte Kunde, eine entsprechende Sitzposition auf dem Sattel einnimmt. Diese unterscheidet sich deutlich beispielsweise von der Sitzposition auf einem Stuhl. Insbesondere in einer nach vorne gebeugten Position, wie beim Rennrad- oder Mountainbikefahren, ändert sich die Lage und der Abstand der Sitzknochen zueinander. Dies hat zur Folge, dass ein Messen des Sitzknochenabstandes in aufrechter Sitzposition zu Fehlbeurteilungen hinsichtlich des richtigen Sattels führt. Mit Hilfe der erfindungsgemäßen Fahrradsattel-Uberprüfungseinrichtung ist es somit möglich, beispielsweise den interessierenden Sattel auf dem Fahrrad des Kunden zu montieren, so dass der Sitzknochenabstand, bzw. die Stellung der Sitzknochen, in der individuellen Fahrposition bestimmt wird.

Erfindungsgemäß ist an bzw. auf dem Druckabbildeelement eine Messskala vorgesehen. Diese kann an der Oberseite, d. h. der von dem Sattel weg weisenden Seite, vorgesehen sein Bei einem insbesondere vollständig transparenten Druckabbildeelement kann die Messskala auch an der Unterseite angeordnet sein. Dies hat den Vorteil, dass die Messskala durch die Sitzknochen nicht verformt wird.

Durch das Vorsehen einer Messskala an bzw. auf dem Druckabbildeelement ist es möglich, die Lage, insbesondere den Abstand der Sitzknochen zueinander unmittelbar abzulesen Ein aufwändiges und fehlerbehaftetes Ausmessen der Lage ist nicht erforderlich. Hierbei ist es besonders bevorzugt, eine Messskala vorzusehen, die, bezogen auf eine mit der Längsachse des Sattels zusammenfallende Mittellinie symmetrisch ausgebildet ist. Es kann somit auf einfache Weise der Abstand der beiden Sitzknochen zur Sattelmittellinie abgelesen werden. Ferner weist die Messskala vorzugsweise eine Einteilung in Sattellängsrichtung auf, so dass beispielsweise festgestellt werden kann, ob es sich um einen Sattel mit zu kleinem oder zu großem Gesäßbereich handelt.

Besonders bevorzugt ist es, dass die Messskala insbesondere zusätzlich Messfelder aufweist. Hierbei handelt es sich um insbesondere rechteckige bzw. quadratische Bereiche, die insbesondere entsprechend eines Koordinatensystems in Verbindung mit Koordinatenachsen vorgesehen sind. Hierbei ist vorzugsweise eine der Koordinatenachsen entsprechend der Längsachse des Fahrradsattels und die andere Koordinatenachse senkrecht zu dieser angeordnet. Beispielsweise durch einfaches Abzählen der Messfelder ist es möglich, unmittelbar Rückschlüsse auf die hinsichtlich der Sitzknochen erforderliche Sitzfläche zu schließen. Ein besonderer Vorteil der Messskala besteht somit darin, dass ein unmittelbares Ablesen einzelner Daten möglich ist. Ein Messen dieser Daten, das stets mit Ungenauigkeiten verbunden ist, ist nicht erforderlich.

Um ein möglichst genaues Fixieren des Druckabbildeelementes auf dem Sattel zu gewährleisten, ist die Fixiereinrichtung vorzugsweise als Sattelüberzug ausgebildet. Dies hat ferner den Vorteil, dass die erfindungsgemäße Fahrradsattel-Überprüfungseinrichtung schnell und auf einfache Weise auf unterschiedliche Sättel aufgezogen werden kann.

Da es sich in besonders bevorzugter Ausführungsform der Erfindung um einen Sattelüberzug handelt, ist es möglich, diesen unmittelbar nacheinander auf unterschiedliche Sättel aufzuziehen. Stellt beispielsweise ein Kunde beim Kauf eines Sattels auf Grund des Verwendens der erfindungsgemäßen Prüfungseinrichtung fest, dass der Sitzkomfort eines Sattels nicht dem gewunschten Sitzkomfort entspricht, kann unmittelbar ein neuer Sattel mit Hilfe der Uberprüfungseinrichtung getestet werden. Hierbei kann auf Grund des entstehenden Sitzbildes mit dem Druckabbildeelement von einem Fachmann auf Grund der vorgesehenen Skala schnell abgelesen und ermittelt werden, ob der getestete Sattel den individuellen Anforderungen entspricht. Es handelt sich somit um ein äußerst kostengünstiges Verfahren zur Auswahl eines individuell passenden Sattels. Ferner ist es möglich, mit Hilfe eines derartigen Satteluberzugs einen eigenen Sattel zu testen. Beispielsweise kann durch das Erkennen von Problemzonen bereits durch ein Verstellen der Sattelneigung, des Abstandes zwischen Sattel und Lenkervorbau etc. auf einfache Weise Abhilfe geschaffen werden.

Das Druckabbildeelement weist vorzugsweise ein elastisches Material auf oder ist aus elastischem Material hergestellt. Dies hat den Vorteil, dass das Druckabbildeelement nicht ausgewechselt werden muss, sondern die Fahrradsattel-Überprüfungseinrichtung wiederverwendet werden kann.Die erfindungsgemäße Fahrradsattel-Überprüfungseinrichtung kann somit von einem Benutzer bzw. Kunden genutzt werden, um in kurzen Zeitabständen unterschiedliche Sättel zu testen. Hierbei ist das elastische Material vorzugsweise derart ausgebildet, dass ein selbsttätiges Pückstellen des Materials erfolgt, wobei die Rückstellung vorzugsweise erst nach mehr als 1 - 2 Sekunden, insbesondere erst nach mehr als 5 Sekunden erfolgt, um eine ausreichende Visualisierung der Lage der Sitzknochen zu gewährleisten.

Bei einer besonders bevorzugten Ausführungsform weist das Druckabbildeelement einen Aufnahmehohlraum auf. In dem Aufnahmehohlraum kann ein schaumartiges, elastisches Material angeordnet sein. Besonders bevorzugt ist es, in dem Aufnahmehohlraum ein Gel vorzusehen. Das Gel weist hierbei eine derart gewählte Viskosität auf, dass über einen Zeitraum von mehr als 1 - 2 Sekunden, vorzugsweise mehr als 5 Sekunden, die abgebildeten Sitzknochen sichtbar bleiben. Anschließend fließt das Gel entweder in seine ursprüngliche Lage zurück oder kann glatt gestrichen werden. In einer besonders bevorzugten Ausführungsform wird ein Gel, insbesondere ein medizinisches Gel, verwendet, das die durch die Abdrucke der Sitzknochen erhaltene Form über einen längeren Zeitraum von vorzugsweise mehreren Stunden beibehält. Die Viskosität ist hierbei derart hoch gewählt, dass das erhaltene Sitzbild über einen langen Zeitraum von insbesondere mehreren Minuten, vorzugsweise mehreren Stunden, erhalten bleibt. Insbesondere ist die Viskosität derart gewählt, dass ein Glattstreichen erforderlich ist, um die insbesondere als wiederverwendbarer Sattelüberzug ausgebildete Überprufungseinrichtung erneut verwenden zu können

Vorzugsweise ist der Aufnahmehohlraum zumindest teilweise transparent, um eine gute Visualisierung der abgebildeten Sitzknochen zu gewährleisten.

Nachfolgend wird die Erfindung an Hand einer bevorzugten Ausführungsform unter Bezugnahme auf die anliegenden Zeichnungen näher erläutert.

Es zeigen :
- Fig. 1: eine schematische Draufsicht einer auf einen Sattel aufgespannten Fahrradsattel-Überprüfungseinrichtung und
- Fig. 2: eine schematische Schnittansicht entlang der Linie II - II in Fig. 1

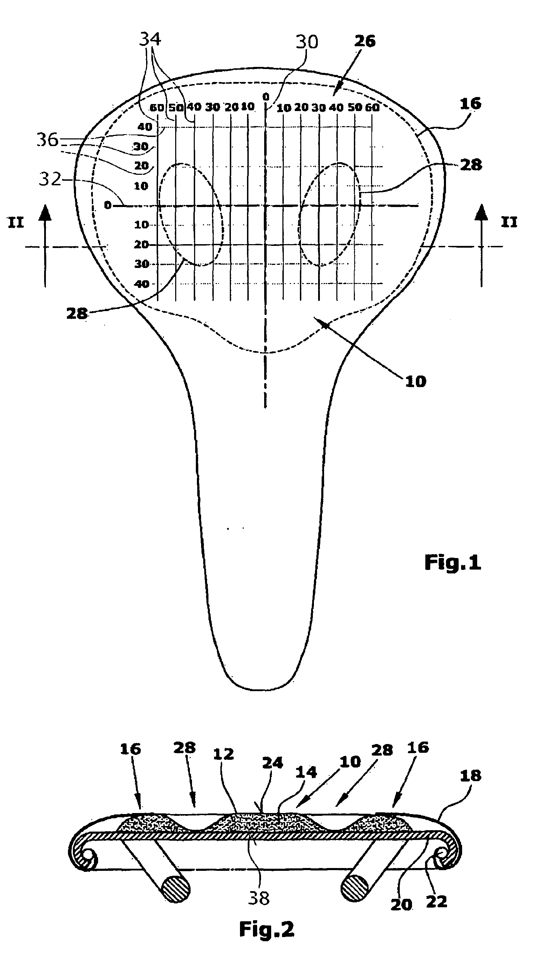

Im dargestellten Ausführungsbeispiel handelt es sich bei dem Druckabbildeelement um ein Gelkissen 10 (Fig. 2). Das Gelkissen weist eine aus transparentem Material, wie beispielsweise Kunststofffolie, hergestellte Umhullung 12 auf, die einen Aufnahmehohlraum 14 ausbildet, in dem das Gel angeordnet ist. Die Folie ist in einem Verbindungsbereich 16 mit einer Fixiereinrichtung 18, bei der es sich insbesondere um ein dehnbares Material, wie einen dehnbaren Stoff, handelt, verbunden. Beispielsweise ist die Fixiereinrichtung 18 in dem Verbindungsbereich 16 mit dem Gelkissen verklebt.

Die Fixiereinrichtung 18 ist vorzugsweise derart ausgebildet, dass eine Sattelschale 20 (Fig. 2) umgriffen wird, so dass die Fahrradsattel-Uberprüfungseinrichtung mit Hilfe der Fixiereinrichtung 18 an der Sattelschale 20 fixiert ist. Dies kann beispielsweise durch eine Halteeinrichtung 22, wie einen Gummizug oder eine zusammenziehbare Schnur, erfolgen.

Auf einer Oberseite 24 (Fig. 2) des Gelkissens 10 ist eine Skala 26 (Fig. 1) vorgesehen, beispielsweise aufgedruckt. Mit Hilfe der Skala 26 ist es möglich, die Abdrucke 28 von Sitzknochen in ihrer Lage näher zu bestimmen. Üblicherweise ist es jedoch ausreichend, die Lage der Sitzknochen, d. h. die Lage der Abdrücke 28 relativ zu dem Sattel zu beurteilen, um überprüfen zu können, ob der Sattel für den entsprechenden Benutzer geeignet ist. Ein exaktes Ausmessen der Lage der Sitzknochen ist nicht unbedingt erforderlich. Auch wenn nur die relative Lage der Sitzknochen zum Sattel beurteilt werden soll, ist dies auf Grund des Vorsehens der Messskala deutlich einfacher.

In der dargestellten, besonders bevorzugten Ausführungsform der Messskala 26 weist diese eine in Längsrichtung des Sattels verlaufende Mittellinie bzw. Koordinatenachse 30 und eine hierzu senkrecht verlaufende Koordinatenachse 32 auf Durch Vorsehen einer Rasterung oder Gitterlinien 34,36 ist ein einfaches Ablesen der Abdrucke 28 möglich. Auch kann die ungefähre Fläche der Abdrücke 28 durch einfaches Abzählen der Quadrate bestimmt werden.

In besonders bevorzugten Ausführungsform ist die Messskala an einer Unterseite 38 (Fig. 2) des zumindest teilweise transparenten Gelkissens 10 angeordnet. Hierdurch ist ein Verzerren der Messskala auf Grund der Abdrücke 28 vermieden.

## Patentansprüche

1. Fahrradsattcl-Übcrprüfungseinrichtung zur Überprüfung des Sitzkomforts, insbesondere für Sportsättel, mit
einem Druckabbildeelement (10) zum Visualisieren der auf Sitzknochen eines Benutzers wirkenden Kräfte und
einer mit dem Druckabbildeelement verbundenen Fixiereinrichtung (18) zur Befestigung auf dem zu prüfenden Sattel,
**dadurch gekennzeichnet, dass**
das Druckabbildeelement (10) eine Messskala (26) aufweist.

2. Fahrradsattel-Überprüfungseinrichtung nach Anspruch 1, **dadurch gekennzeichnet, dass** das Druckabbildeelement (10) ein elastisches Material aufweist.

3. Fahrradsattel-Überpiüfungseinrichtung nach Anspruch 2, **dadurch gekennzeichnet, dass** das Material derart ausgewählt ist, dass eine Rückstellung erst nach mehr als einer Sekunde, insbesondere nach mehr als 5 Sekunden erfolgt.

4. Fafrradsattel-Überprüfungseinrichtung nach einem der Ansprüche 1 - 3, **dadurch gekennzeichnet, dass** das Druckabbildeelement (10) in einem Aufnahmehohlraum (14) angeordnet ist, wobei das Druckabbildeelement (10) vorzugsweise ein Gel aufweist.

5. Fahrradsattel-Uberprüfungseinrichtung nach Anspruch 4, **dadurch gekennzeichnet, dass** der Aufnahmehohlraum (14) zumindest teilweise, insbesondere im Bereich der Visualisierung, transparent ist.

6. Fahrradsattet-Übcrprufungseinrichtung nach einem der Ansprüche 1 - 5, **dadurch gekennzeichnet, dass** die Fixiereinrichtung (18) als Satteluberzug ausgebildet ist.

7. Fahrradsattel-Überprüfungseinrichtung nach einem der Ansprüche 1 - 6, **dadurch gekennzeichnet, dass** die Messskala (26) an einer Unterseite (38) des Druckabbildeelements (10) vorgesehen ist, wobei das Druckabbildeelement (10) bzw. der Aufnahmehohlraum (14) insbesondere in diesem Bereich transparent ist.

8. Fahrradsattel-Uberprüfungseinrichtung nach einem der Ansprüche 1 - 7, **dadurch gekennzeichnet, dass** die Messskala (26) einzelne, insbesondere quadratische Messfelder aufweist.

## Claims

1. A bicycle saddle inspection device for checking the sitting comfort, especially for sports saddles, comprising
a pressure imaging element (10) for visualizing the forces exerted on the sitting bones of a user, and
a fixing means (18) connected with the pressure imaging element, for fastening to the saddle to be checked,
**characterized in that**
the pressure imaging element (10) comprises a measurement scale (26).

2. The bicycle saddle inspection device of claim 1, **characterized in that** the pressure imaging element (10) comprises an elastic material.

3. The bicycle saddle inspection device of claim 2, **characterized in that** the material is chosen such that a returning occurs only after more than one second, in particular after more than 5 seconds.

4. The bicycle saddle inspection device of one of claims 1-3, **characterized in that** the pressure imaging element (10) is arranged in an accommodation cavity (14), the pressure imaging element (10) preferably comprising a gel.

5. The bicycle saddle inspection device of claim 4, **characterized in that** the accommodation cavity (14) is at least partly transparent, in particular in the region of visualization.

6. The bicycle saddle inspection device of one of claims 1-5, **characterized in that** the fixing means (18) is in the form of a saddle cover.

7. The bicycle saddle inspection device of one of claims 1-6, **characterized in that** the measurement scale (26) is provided at a lower surface (38) of the pressure imaging element (10), the pressure imaging element (10) or the accommodation cavity (14) being transparent especially in this area.

8. The bicycle saddle inspection device of one of claims 1-7, **characterized in that** the measurement scale (26) comprises individual, especially square measuring fields.

## Revendications

1. Dispositif de contrôle d'une selle de bicyclette pour le contrôle du confort de la position assise, en particulier pour des selles de sport, comportant
un élément de reproduction de pression (10) pour la visualisation des forces agissant sur les ischions d'un utilisateur et
un dispositif de fixation (18) relié à l'élément de reproduction de pression, pour son ancrage sur la selle à examiner,
**caractérisé en ce que**
l'élément de reproduction de pression (10) présente une échelle de mesure (26).

2. Dispositif de contrôle d'une selle de bicyclette selon la revendication 1, **caractérisé en ce que** l'élément de reproduction de pression (10) comprend un matériau élastique.

3. Dispositif de contrôle d'une selle de bicyclette selon la revendication 2, **caractérisé en ce que** le matériau est choisi d'une manière telle, qu'un rappel ne se produise qu'au bout de plus d'une seconde, en particulier au bout de plus de 5 secondes.

4. Dispositif de contrôle d'une selle de bicyclette selon l'une des revendications 1 à 3, **caractérisé en ce que** l'élément de reproduction de pression (10) est disposé dans une cavité de réception (14), l'élément de reproduction de pression (10) comprenant, de préférence, un gel.

5. Dispositif de contrôle d'une selle de bicyclette selon la revendication 4, **caractérisé en ce que** la cavité de réception (14) est transparente, au moins partiellement, en particulier dans la région de la visualisation.

6. Dispositif de contrôle d'une selle de bicyclette selon l'une des revendications 1 à 5, **caractérisé en ce que** le dispositif de fixation (18) est réalisé sous forme d'une enveloppe de revêtement de la selle.

7. Dispositif de contrôle d'une selle de bicyclette selon l'une des revendications 1 à 6, **caractérisé en ce que** l'échelle de mesure (26) est prévue sur une face inférieure (38) de l'élément de reproduction de pression (10), l'élément de reproduction de pression (10) ou la cavité de réception (14) étant transparent, en particulier dans cette région.

8. Dispositif de contrôle d'une selle de bicyclette selon l'une des revendications 1 à 7, **caractérisé en ce que** l'échelle de mesure (26) présente des secteurs de mesure individuels, en particulier carrés.
